# EUROPEAN PATENT SPECIFICATION

(11) **EP 0 346 544 B1**
(45) Date of publication and mention of the grant of the patent: **24.11.1993**
(21) Application number: 88305504.8
(22) Date of filing: 16.06.1988
(51) Int. Cl.: A01N 25/24

(54) **Pesticidal compositions**
Pestizide Zusammensetzungen
Compositions pesticides

(43) Date of publication of application: 20.12.1989
(73) Proprietor: CARTER-WALLACE INC., New York NY 10153 (US)
(72) Inventor: Ott, Bruce S., New Bern, NC 28560 (US); Kohlhepp, Frederick F., Grapevine, TX 76051 (US); Haus, Joseph, Bellevue, WA 98007 (US)
(74) Representative: Gore, Peter Manson

(56) References cited:
- EP-A- 0 051 786
- FR-A- 2 216 921
- FR-A- 2 599 220
- US-A- 3 810 977

## Description

The present invention relates to compositions for preventing, eliminating and/or controlling flea and tick infestation in animals, particularly household pets, and to the use thereof.

Flea and tick infestation of household pets is a perennial and often frustating problem to pet owners. A wide variety of products is commercially available for the treatment of fleas including aerosol and pump sprays, dips, powders, shampoos and the like which are substantially effective in the elimination of fleas and ticks from household pets. However, pets are readily reinfested by fleas and ticks after treatment with the above-noted products simply by returning to a flea infested environment or contact with flea infested animals.

It has been proposed to provide long term protection, i.e. more than twenty (20) days, against flea and tick infestation by attaching to the animal insecticide, holders adapted to hold and apply liquid insecticides to the animal's coat, as described, for example, in US- A- 2 306 076 and US- A- 3 687 114. It has also been proposed to impregnate porous metal pendants or the like with insecticides which will vaporize when attached to the animal's collar and kill fleas in the surrounding area, as described, for example, in US- A- 2 661 238.

It is now well established practice in the pet care industry to obtain controlled or sustained release of an insecticide system by incorporation of the insecticide into a polymeric system. A pesticide dispersed in a polymeric system is desirably released by diffusion or by plasticization and/or swelling of the polymer membrane.

In more recent times, collars have been provided for placement around the animal's neck, which are designed to provide continuous protection over a period of time. The collars are natural or synthetic materials impregnated with insecticides in powder or liquid form, which insecticides continually migrate to the collar surface and spread over the surface of the animal's skin, during the effective life of the collar. Such insecticides/pesticides kill fleas and ticks upon contact in the neck area of the animal, when the pests migrate towards the animal's head or the insecticide/pesticide may vaporize and provide an insecticidal fog in the environment adjacent to the animal's hair shafts and skin. Representative of such collars are those described in US- A- 3 852 416.

It has also been proposed to provide adherent, controlled release pesticide compositions which may be sprayed on an animal's coat and which provide a sustained killing effect over the useful life of the compositions, as described, for example, in US- A- 4 172 904. However, such compositions can be difficult to remove and do not leave the animal's coat in a soft natural condition.

In order to provide adequate control of flea infestation over substantially all of an animal's body, the insecticide compositions must meet the following criteria:-
(1) the composition must be adherent to the hair shafts and skin of the animal;
(2) the composition must be substantive when applied to the hair shafts to the extent that it will not flake and is not easily removed by wind, rain or casual brushing or petting of the animal;
(3) the composition must be readily removable from the hair shafts of the animal by washing with mildly alkaline shampoo;
(4) the composition, when applied to the hair shafts of the animal's hide, must substantially coat the individual hair shafts and when dried, must leave the coat in a soft, natural unmatted, non-tacky condition;
(5) the composition must not discolour the coat of the animal;
(6) the composition must effectively kill fleas and ticks over an extended period of time when applied to the shafts of hair of the animal's coat;
(7) the composition must permit the hair shafts and skin of the animal to breathe, i.e., must be adequately permeable to oxygen, carbon dioxide and water vapour; and,
(8) the composition must be non-toxic to the animal and human beings.

It has now been found possible to produce a compositon which meets the above criteria. The present invention particularly provides non-toxic pesticide compositions which readily adhere to the shafts of hair of an animal's coat, which may be removed from the shafts of hair of the animal's coat by washing with mildly alkaline shampoo and which continuously release, during the effective life of the composition, amounts of insecticide adequate to exert insecticidal activity on the environment immediately surrounding the coated hair shafts. The present invention also provides methods of coating the shafts of hair of an animal's coat whereby insecticidal activity is provided on the environment immediately surrounding the coated hair shafts.

According to the present invention there is provided a liquid composition for direct application to the skin and hair of animals for the prevention and control of flea and tick infestation which comprises from 0.50% by weight to 3.00% by weight of a terpolymer of vinyl acetate/crotonic acid/venylneodecanoate, from 95.0% by weight to 98.5% by weight of ethanol, and from 0.025% by weight to 2.50% by weight of chlorpyrifos. Particular embodiments of the present invention relate to compositions composed basically of the ethanol solvent, the terpolymer material, the chlorpyrifos insecticide and optionally one or more of propellants, fragrances, plasticizers, antioxidants and ultra violet light absorbers.

Terpolymer materials useful in the present invention are vinyl acetate/crotonic acid/vinyl neodecanoate terpolymers, preferably containing 10% crotonic acid and 90% of a mixture of vinyl acetate and vinyl neodecanoate, such as one available from National Starch and Chemical Corporation under the Trademark RESYN 28-2930. The terpolymer material is present in the compositions of the present invention in amounts ranging from 0.50% by weight to 3.00% by weight of the total composition, preferably 1.00% by weight to 2.50% by weight of the total composition. Preferably the terpolymer material is in the form of fine, translucent beads.

The solvent-carrier material used in the present invention is ethanol, present in amounts ranging from 95.0% by weight to 98.5% by weight of the total composition is the solvent. A preferred amount of solvent is about 96.75% to 98.5% by weight, especially 98.5%.

The insecticide is present in the compositions of the present invention in an amount sufficient to exert insecticidal activity on the skin and the environment immediately surrounding the coated animal hair shaft for an extended period of time.

Obviously, the amount of insecticide present will depend on many elements, for example, the method of application (including dipping, aerosol spray and pump spray), the thickness of the polymer coating when applied to the hair shaft, the duration of insecticidal activity desired, and the physical state of the insecticide. The optional amount of insecticide present in the composition, based on the foregoing considerations can be readily determined by one skilled in the art. The insecticide is present in amounts ranging from 0.025% by weight to 2.50% of the total composition, preferably 0.25% by weight to 0.50% by weight, and more preferably 0.25% by weight.

In addition to the foregiong, the compositions of the present invention may include additional ingredients such as, for example, propellants, fragrances, antioxidants, ultraviolet light stabilizers, plasticizers, synergists and the like. It has been found particularly desirable to add plasticizers such as, for example, petroleum base oil, dibutyl phthalate, disctyl phthalate, dibutoxy ethylphthalate, diamyl phthalate, castor oil, soybean oil and lanolin oil as well as ultraviolet light absorbers such as, for example, 2-hydroxy-4-octyloxybenzophenone, antioxidants such as, for example, 3-(3'5'-di-t-butyl-4'-hydroxyphenyl) proprionate, and insecticide synergists such as, for example, piperonyl butoxide, which may be present in amounts ranging from zero to 1.5%, preferably 0.25% to 1.00%, by weight of the composition.

It has been found that particularly effective and efficient presentations of the formulations of the present invention for the control and/or eradication of fleas and ticks on household pets such as, for example, dogs and cats can be packaged in conventional aerosol containers which utilize standard containers, valves and propellants in a manner well-known to those skilled in the aerosol art.

The preparation of the compositions of the present invention may be carried out according to the following procedure:
1. Charge mixing vessel with solvent 15 to 21°C (60 to 70°F).
2. Begin agitation and slowly add polymeric material until all solids are in solution.
3. Add insecticide and optionally, the plasticizer and other ingredients such as, for example antioxidants and ultraviolet light stabilizers.
4. Filter and pack into bottles preferably equipped with pump spray applicators.

The present invention will now be further illustrated by, but is in no manner limited to, the following Examples. All percentages are by weight unless otherwise specified.

### EXAMPLES 1 to 4

To test the effective killing power of the compositions of the present invention against live fleas and ticks, the following formulations were prepared in the foregoing manner:

| Ingredient | Example No. | | | |
|---|---|---|---|---|
| | 1 | 2 | 3 | 4 |
| RESYN 28-2930 | 2.50% | 2.50% | 1.00% | 1.00% |
| Chlorpyrifos | 0.25% | 0.25% | 0.50% | 0.50% |
| Ethyl alcohol(anhydrous) | 96.75% | 96.75% | 98.25% | 98.15% |
| Epoxidized Soybean Oil | -- | -- | -- | 0.1% |
| Cetearyl octanoate | 0.25% | -- | -- | |
| Lanolin Oil | 0.25% | -- | -- | -- |
| Fragrance | 0.25% | 0.25% | 0.25% | 0.25% |

The formulations were put in 227 grams (8 oz.) high density polyethylene bottles fitted with sprayers, orifice size 0.025mm, delivery per stroke 0.85CC. Samples were weighed before and after application and the weight of material delivered recorded.

A 9 Kg. long haired, white dog was used to test the effectiveness of the compositions. The back of the dog was marked off into four approximately equal surface areas labelled A, B, C and D, respectively. Example 1 was applied to Site A, Example 2 was applied to Site B, Example 3 was applied to Site C and Example 4 was applied to Site D. Each site was sprayed until thoroughly wetted to the skin (approximately 9 to 14 grams of material). When the coat was completely dry, the dog was combed out and approximately 0.5 grams of hair was clipped from each site and placed into a 7 gram (4 dram) screw cap vial containing live fleas. Additional samples were taken from each site on day 30, 57 and 89 and similarly exposed to live fleas.

The observed flea kills for Examples 1 to 4 are given in the following Table.

**TABLE 1**

| Example No. | Initial | 30 Days | 57 Days | 84 Days |
|---|---|---|---|---|
| 1 | 100% | 100% | 100% | 75% |
| | 30 min. | 6 to 18 hrs. | 24 hrs. | 48 hrs. |
| 2 | 100% | 100% | 100% | 95% |
| | 30 min. | 6 hrs. | 18 hrs. | 48 hrs. |
| 3 | 100% | 100% | 100% | 95% |
| | 30 min. | 18 hrs. | 24 hrs. | 24 hrs. |
| 4 | 100% | 100% | 100% | 95% |
| | 30 min. | 24 hrs. | 24 hrs. | 24 hrs. |

| | % by weight |
|---|---|
| Resyn 28-2930 | 2.00 |
| Pyrenone O.T. | 1.40 |
| Cyasorb UV 531 | 0.10 |
| Irganox | 0.10 |
| Ethanol, SDA-40-200 Proof | 98.55 |
| Fragrance | 0.25 |

## Claims

1. A liquid composition for direct application to the skin and hair of animals for the prevention and control of flea and tick infestation which comprises from 0.50% by weight to 3.00% by weight of a terpolymer of vinyl acetate/crotonic acid/vinylneoadecanoate, from 95.0% by weight to 98.5% by weight of ethanol, and from 0.025% by weight to 2.50% by weight of chlorpyrifos.

2. A composition according to claim 1, wherein the terpolymer contains 10% crotonic acid and 90% of a mixture of vinyl acetate and vinyl neodecanoate.

3. A composition according to claim 1 or 2, wherein there is present from 1.00% by weight to 2.50% by weight of the terpolymer.

4. A composition according to any of claims 1 to 3, wherein there is present 1.00% by weight of the terpolymer.

5. A composition according to any of claims 1 to 4, wherein there is present from 96.75% by weight to 98.5% by weight of ethanol.

6. A composition according to claim 5, wherein there is present 98.5% by weight of ethanol.

7. A composition according to any of claims 1 to 6, wherein there is present from 0.25% by weight to 0.50% by weight of chlorpyrifos.

8. A composition according to claim 7, wherein there is present 0.25% by weight of chlorpyrifos.

9. A composition according to any of claims 1 to 8, wherein there is also present up to 1.5% by weight of a fragrance.

10. A composition according to claim 9, wherein there is present from 0.25% by weight to 1.00% by weight of the fragrance.

11. A composition according to claim 10, wherein there is 0.25% by weight of the fragrance.

12. A method for the prolonged prevention and control of flea and tick infestation on animals which comprises wetting the skin and hair shafts of such animals with a liquid composition according to any of claims 1 to 11.

13. A method according to claim 12, wherein the animals are canine animals.

## Patentansprüche

1. Flüssige Zusammensetzung zur direkten Anwendung auf Haut oder Haar von Tieren zur Vermeidung und Behandlung von Floh- und Zeckenbefall, die von 0,50 Gewichts-% bis 3,00 Gewichts-% eines Terpolymers von Vinylacetat/Crotonsäure/Vinylneodecanoat, von 95,0 Gewichts-% bis 98,5 Gewichts-% Ethanol und von 0,025 Gewichts-% bis 2,50 Gewichts-% Chlorpyrifos aufweist.

2. Zusammensetzung nach Anspruch 1, worin das Terpolymer 10 % Crotonsäure und 90 % einer Mischung von Vinylacetat und Vinylneodecanoat enthält.

3. Zusammensetzung nach Anspruch 1 oder 2, worin von 1,00 Gewichts-% bis 2,50 Gewichts-% des Terpolymers vorhanden sind.

4. Zusammensetzung nach einem der Ansprüche 1 bis 3, worin 1,00 Gewichts-% des Terpolymers vorhanden sind.

5. Zusammensetzung nach einem der Ansprüche 1 bis 4, worin von 96,75 Gewichts-% bis 98,5 Gewichts-% Ethanol vorhanden sind.

6. Zusammensetzung nach Anspruch 5, woran 98,5 Gewichts-% Ethanol vorhanden sind. -

7. Zusammensetzung nach einem der Ansprüche 1 bis 6, worin von 0,25 Gewichts-% bis 0.50 Gewichts-% Chlorpyrifos vorhanden sind.

8. Zusammensetzung nach Anspruch 7, worin 0,25 Gewichts-% Chlorpyrifos vorhanden sind.

9. Zusammensetzung nach einem der Ansprüche 1 bis 8, worin auch bis zu 1,5 Gewichts-% eines Duftstoffes vorhanden sind.

10. Zusammensetzung nach Anspruch 9, worin von 0,25 Gewichts-% bis 1,00 Gewichts-% des Duftstoffes vorhanden sind.

11. Zusammensetzung nach Anspruch 10, worin 0,25 Gewichts-% des Duftstoffes vorhanden sind.

12. Verfahren zur prolongierten Vermeidung und Behandlung von Floh- und Zeckenbefall auf Tieren, das Benetzen der Haut und der Haarschäfte solcher Tiere mit einer flüssigen Zusammensetzung nach einem der Ansprüche 1 bis 11 umfaßt.

13. Verfahren nach Anspruch 12, worin die Tiere Hunde sind.

## Revendications

1. Composition liquide pour application directe à la peau et aux poils d'animaux pour la prévention et le contrôle de l'infestation par las puces et les tiques, qui comprend de 0,50 % en poids à 3,00 % en poids d'un terpolymère d'acétate de vinyle/ acide crotonique/ néoadécanoate de vinyle, de 95 % en poids à 98,5 % en poids d'éthanol et de 0,025 % en poids à 2,50 % on poids de chloropyrifos.

2. Composition selon la revendication 1 dans laquelle le terpolymère contient 10 % d'acide crotonique et 90 % d'un mélange d'acétate de vinyle et de néodécanoate de vinyle.

3. Composition selon la revendication 1 ou 2, dans laquelle il y a de 1 % en poids à 2,50 % en poids de terpolymère.

4. Composition selon l'une des revendications 1 à 3 dans laquelle il y a 1 % en poids du terpolymère.

5. Composition selon l'une des revendications 1 à 4, dans laquelle il y a de 96,75 % en poids à 98,5 % en poids d'éthanol.

6. Composition selon la revendication 5, dans laquelle il y a 98,5 % en poids d'éthanol.

7. Composition selon l'une des revendications 1 à 6, dans laquelle il y a de 0,25 % an poids à 0,50 % en poids de chloropyrifos.

8. Composition selon la revendication 7, dans laquelle il y a 0,25 % en poids de chloropyrifos.

9. Composition salon l'une des revendications 1 à 8, dans laquelle il y a jusqu'à 1,5 % en poids d'un parfum.

10. Composition selon la revendication 9, dans laquelle il y a de 0,25 % en poids à 1 % en poids du parfum.

11. Composition selon la revendication 10, dans laquelle il y a 0,26 % en poids du parfum.

12. Procédé pour la prévention et la contrôle prolongés de l'infestation d'animaux par les puces et les tiques qui comprend le mouillage de la peau et des poils de ces animaux avec une composition liquide selon l'une des revendications 1 á 11.

13. Procédé selon 18 revendication 12, dans laquelle les animaux sont las canidés.
